# EUROPEAN PATENT APPLICATION

(11) **EP 4 621 807 A1**
(43) Date of publication of application: **24.09.2025**
(21) Application number: 23891476.6
(22) Date of filing: 10.11.2023
(51) Int. Cl.: H01B 1/06

(54) **SOLID ELECTROLYTE AND BATTERY**

(30) Priority: 14.11.2022 WO PCT/JP2022/042227
(71) Applicant: NGK Insulators, Ltd., Nagoya city, Aichi 467-8530 (JP)
(72) Inventor: YAGI, En, Nagoya-city, Aichi 467-8530 (JP); TAKAHASHI, Haruto, Nagoya-city, Aichi 467-8530 (JP); YOSHIDA, Toshihiro, Nagoya-city, Aichi 467-8530 (JP); MUKOGAWA, Akane, Nagoya-city, Aichi 467-8530 (JP)
(74) Representative: Mewburn Ellis LLP
(86) International application number: PCT/JP2023/040543
(87) International publication number: WO 2024/106327

(57) **Abstract**

A solid electrolyte contains A, M, F, and X. A is at least one element selected from a group consisting of Li, Na, and K. M is a metallic element(s) other than A or a metalloid element(s). X is at least one element selected from a group consisting of Cl, Br, and I. This provides the solid electrolyte with high safety and high ion conductivity.

## Description

### TECHNICAL FIELD

The present invention relates to a solid electrolyte and a battery.

### Cross-Reference to Related Application

This application claims priority benefit of International Application No. PCT/JP2022/42227 filed on November 14, 2022, the entire disclosure of which is incorporated herein by reference.

### BACKGROUND ART

In recent years, development of solid electrolytes for use in all solid-state batteries has been progressing. For example, Japanese Patent Application Laid-Open No. 2011-129312 (Document 1) discloses a solid electrolyte consisting of a sulfide and an all solid-state battery including the solid electrolyte. Solid electrolytes each consisting of a sulfide may react with moisture in the air and generate toxic hydrogen sulfide gas. In view of this, International Publications No. 2021/161604 (Document 2) and No. 2021/186833 (Document 3) each propose a solid electrolyte of a fluorine compound. Specifically, the solid electrolyte according to Document 2 contains Li, Zr, Al, and F. The solid electrolyte according to Document 3 contains Li, Ti, Al, M, and F, where M is Zr or Mg. "Solid Halide Electrolytes with High Lithium-ion conductivity for Application in 4V Class Bulk-Type All-Solid-State Batteries" by Tetsuya Asano and other five members (ADVANCED MATERIALS, 2018, vol. 30, 1803075) (Document 4) describes a solid electrolyte material of Li₃YCl₆.

Meanwhile, the solid electrolytes of a fluorine compound according to Documents 2 and 3 have improved safety, but their lithium-ion conductivities are of the order of 10⁻⁶ S/cm and insufficient.

### SUMMARY OF THE INVENTION

The present invention is intended for a solid electrolyte, and it is an object of the present invention to provide a solid electrolyte with high safety and high ion conductivity.

Aspect 1 of the present invention is a solid electrolyte containing A, M, F, and X. A is at least one element selected from a group consisting of Li, Na, and K, M is a metallic element(s) other than A or a metalloid element(s), and X is at least one element selected from a group consisting of Cl, Br, and I.

According to the present invention, it is possible to provide the solid electrolyte with high safety and high ion conductivity.

Aspect 2 of the present invention is the solid electrolyte according to Aspect 1, in which M contains Ga.

Aspect 3 of the present invention is the solid electrolyte according to Aspect 1 or 2, the solid electrolyte being expressed by a composition formula of A₃MF₆₋ₐXₐ, where 0 < a < 6 is satisfied.

Aspect 4 of the present invention is the solid electrolyte according to Aspect 1 or 2, in which M contains at least one element selected from a group consisting of Mα serving as a trivalent cation, Mβ serving as a tetravalent cation, and Mγ serving as a bivalent cation, and the solid electrolyte is expressed by a composition formula of A_{3-b+c}Mα_{1-b-c}Mβ_{b}Mγ_{c}F₆₋ₐXₐ, where 0 < a < 6, 0 ≤ b < 1, and 0 ≤ c < 1 are satisfied.

Aspect 5 of the present invention is the solid electrolyte according to any one of Aspects 1 to 4, in which M contains Zr.

Aspect 6 of the present invention is the solid electrolyte according to any one of Aspects 1 to 5, in which M contains Mg.

Aspect 7 of the present invention is a battery including the solid electrolyte according to any one of Aspects 1 to 6.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a longitudinal sectional view showing an all solid-state lithium-ion secondary battery.
Fig. 2 is a diagram showing a discharge curve of the all solid-state battery.

### DESCRIPTION OF EMBODIMENTS

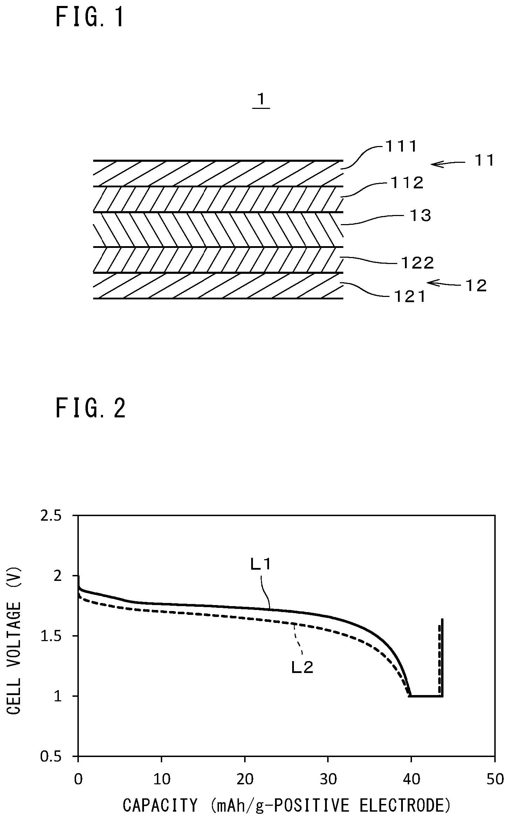

Fig. 1 is a longitudinal sectional view showing an all solid-state lithium-ion secondary battery 1 (hereinafter, simply referred to as the "all solid-state secondary battery 1"). The all solid-state secondary battery 1 includes a positive electrode 11, an electrolyte layer 13, and a negative electrode 12 in order from the top of Fig. 1. That is, the electrolyte layer 13 is provided between the positive electrode 11 and the negative electrode 12. The electrolyte layer 13 is a solid electrolyte layer and serves also as a separator layer. The positive electrode 11 includes a current collector 111 and a positive electrode layer 112. The positive electrode layer 112 includes a positive active material. The negative electrode 12 includes a current collector 121 and a negative electrode layer 122. The negative electrode layer 122 includes a negative active material.

The positive active material of the positive electrode layer 112 may preferably contain a lithium complex oxide. A preferable positive active material may be a lithium complex oxide having a layered rock-salt structure and may, for example, be NCM (Li(Ni,Co,Mn)O₂). The positive active material may also be any other lithium complex oxide and may, for example, be NCA (Li(Ni,Co,Al)O₂) or LCO (LiCoO₂) having a layered rock-salt structure, LNMO (LiNi_{0.5}Mn_{1.5}O₄) having a spinel structure, or LFP (LiFePO₄) having an olivine structure. The positive electrode layer 112 further includes, in addition to the positive active material, a solid electrolyte described later and an electron conductive agent (e.g., carbon black). The positive electrode layer 112 according to the present embodiment is formed by integrating these substances by pressurization or heating.

Examples of the negative active material of the negative electrode layer 122 include compounds such as LTO (Li₄Ti₅O₁₂), NTO (Nb₂TiO₇), titanium oxide (TiO₂), graphite, and silicon monoxide (SiO). The negative electrode layer 122 includes, in addition to the negative active material, a solid electrolyte described later. The negative electrode layer 122 may further include an electron conductive agent (e.g., carbon black). The negative electrode layer 122 according to the present embodiment is formed by integrating these substances by pressurization or heating.

The configurations and materials of the positive electrode 11 and the negative electrode 12 of the all solid-state secondary battery 1 are not limited to the examples described above, and may be any of various configurations and materials.

The electrolyte layer 13 may be a solid electrolyte according to the present invention (hereinafter, also referred to as the "present solid electrolyte"), or may include the present solid electrolyte. The solid electrolyte is a lithium (Li)-ion conductive material. The solid electrolyte contains a lithium element (Li), a fluorine element (F), an element(s) (M) that is a metallic element(s) other than Li or a metalloid element(s), and an element(s) X described later. M may only be one type of element(s), or may include two or more types of elements. One example of M is an element serving as a trivalent cation. M may preferably contain gallium (Ga) and may only be Ga. M may contain, together with Ga, any other element(s) serving as a trivalent cation, and one example of the element(s) is aluminum (Al).

In the specification of the present invention, the metalloid element(s) refers to boron (B), silicon (Si), germanium (Ge), arsenic (As), antimony (Sb), or tellurium (Te). The metallic element(s) refers to an element(s) included in the first to twelfth groups of the periodic table, except hydrogen, and an element(s) included in the thirteenth to sixteenth groups of the periodic table, except the above-described metalloid and C, N, P, O, S, and Se. That is, the metallic element(s) refers to an element group that may serve as cations when forming a halogen compound and an inorganic compound.

X is at least one element selected from a group consisting of chlorine (Cl), bromine (Br), and iodine (I). More preferably, X may include Cl, or may only be Cl. Typically, X substitutes for part of F. For example, the amount of substance of X in the present solid electrolyte may be less than or equal to the amount of substance of F, but it may be greater than the amount of substance of F. The present solid electrolyte does not include sulfide and thus does not generate hydrogen sulfide gas. This provides the all solid-state secondary battery 1 with high safety. As will be described later, the solid electrolyte achieves high lithium-ion conductivity of higher than or equal to 1 × 10⁻⁵ S/cm.

A preferable solid electrolyte is expressed by a composition formula of:

Li₃MF₆₋ₐXₐ, ...(1)

where 0 < a < 6 is satisfied. Composition Formula (1) may more preferably satisfy 1 < a < 6 and yet more preferably satisfy 1 < a < 4. Here, M is an element serving as a trivalent cation, and may include two or more types of elements (e.g., Ga and Al).

In another preferable solid electrolyte, M described above may include Mα serving as a trivalent cation and Mβ serving as a tetravalent cation. In this case, the above-described solid electrolyte is expressed by a composition formula of:

Li_{3-b}Mα_{1-b}Mβ_{b}F₆₋ₐXₐ, ...(2)

where 0 < a < 6 and 0 < b < 1 are satisfied. Composition Formula (2) may more preferably satisfy 1 < a < 6 and yet more preferably satisfy 1 < a < 4. In one example of the solid electrolyte, Mα may be Ga, and Mβ may be zirconium (Zr). For example, the amount of substance of Mα is greater than or equal to the amount of substance of Mβ, but it may be less than the amount of substance of Mβ.

In the present solid electrolyte, M described above may include Mγ serving as a bivalent cation. For example, M may include Mα and may arbitrarily include Mβ and/or Mγ. In this case, the above-described solid electrolyte is expressed by a composition formula of:

Li_{3-b+c}Mα_{1-b-c}Mβ_{b}M_{γ}cF₆₋ₐXₐ ... (3)

where 0 < a < 6, 0 ≤ b < 1, and 0 ≤ c < 1 are satisfied. Composition Formula (3) may more preferably satisfy 1 < a < 6 and yet more preferably may satisfy 1 < a < 4. One example of Mγ is magnesium (Mg). For example, the amount of substance of Mα may be greater than or equal to a total amount of substances of Mβ and Mγ, or may be less than the total amount of substances of Mβ and Mγ.

To determine whether an unknown solid electrolyte is expressed by Composition Formula (1), (2), or (3), for example, Li, Ga, Al, Zr, Mg may be quantitatively determined by ICP emission spectroscopy or any other like method. F and Cl may be quantitatively determined by, for example, ion chromatography. In the case where the present solid electrolyte contains an element(s) other than the elements described above, an appropriate measurement method is selected to allow quantitative determination of the element(s).

The molar ratio of Li, M, F, and X in Composition Formula (1) described above, i.e., Li:M:F:X, is 3:1:6-a:a. In the molar ratio obtained by analysis conducted on the unknown solid electrolyte, if the value of Li is greater than or equal to 0.90 × 3 and less than or equal to 1.10 × 3, it is conceivable that Li satisfies Composition Formula (1) described above. The value of Li may more preferably be greater than or equal to 0.95 × 3 and less than or equal to 1.05 × 3. The same applies to M, F, and X. Composition Formula (2) described above is similar to Composition Formula (1) described above, and if each value in the molar ratio of Li, Mα, Mβ, F, and X obtained by analysis is within the range of ±10% (preferably, ±5%) of the corresponding value in Composition Formula (2) described above, it is conceivable that Composition Formula (2) described above is satisfied. The same applies to Composition Formula (3) described above and Composition Formulas (4) to (7) described later.

The present solid electrolyte may be produced by, for example, the following method. First, fluoride powder containing Li, fluoride powder containing M, and halide powder (LiX) containing Li are prepared. Then, each powder is weighed and mixed together in a predetermined molar ratio. The fluoride powder containing Li may, for example, be lithium fluoride (LiF). The fluoride powder containing Li may be omitted because Li and F are also contained in other powder. In the case where M is Ga, fluoride containing Ga may, for example, be gallium fluoride (GaF₃). In the case where M includes Ga and Al, fluoride containing Al may, for example, be aluminum fluoride (AlF₃). In the case where M includes Ga and Zr, fluoride containing Zr may, for example, be zirconium fluoride (ZrF₄). In the case where M includes Ga and Mg, fluoride containing Mg may, for example, be magnesium fluoride (MgF₂). Halide (LiX) containing Li may, for example, be lithium chloride (LiCl), lithium bromide (LiBr), or lithium iodide (LiI). As a raw material, halide containing M may be used, and this halide may, for example, be gallium chloride (GaCl₃) or zirconium chloride (ZrCl₄), or may also be bromide containing M or iodide containing M.

Then, a resultant mixture is subjected to a mechanical milling process (mechanochemical milling). In one example of the mechanical milling process, a planetary ball mill may be used. The planetary ball mill is capable of generating very high impact energy because a stage with a pot placed thereon revolves while the pot rotates on its axis. The mechanical milling process may also be conducted using any other type of pulverizer. The mechanical milling process described above produces the present solid electrolyte for use in the positive electrode layer 112, the negative electrode layer 122, and the electrolyte layer 13. In the present example of processing, the mechanical milling process is conducted at ordinary temperatures, but conditions for the mechanical milling process, such as temperature, may be changed appropriately. The present solid electrolyte may also be produced by any other method such as firing other than the mechanical milling process.

The present solid electrolyte may contain sodium (Na) or potassium (K) instead of Li, or may contain two or more elements selected from among Li, Na and K. That is, the solid electrolyte contains A, M, F, and X, where A is at least one element selected from a group consisting of Li, Na, and K. M and X are the same as descried above. Even in the case where A is Na, high ion (sodium-ion) conductivity is achieved as will be described later. The same applies to the case where A is K.

In consideration of the case where the present solid electrolyte contains Na or K, Composition Formula (1) described above is expressed as:

A₃MF₆₋ₐXₐ ...(4)

where 0 < a < 6 is satisfied as in Composition Formula (1).

Composition Formula (2) described above is expressed as:

A_{3-b}Mα_{1-b}Mβ_{b}F₆₋ₐXₐ ...(5)

where 0 < a < 6 and 0 < b < 1 are satisfied as in Composition Formula (2).

Composition Formula (3) described above is expressed as:

A_{3-b+c}Mα_{1-b-c}Mβ_{b}Mγ_{c}F₆₋ₐXₐ ...(6)

where 0 < a < 6, 0 ≤ b < 1, and 0 ≤ c < 1 are satisfied as in Composition Formula (3). Note that Na and K may be quantitatively determined by ICP- emission spectroscopy or any other like method.

In the production of a solid electrolyte where A is Na, sodium fluoride (NaF), sodium chloride (NaCl), sodium bromide (NaBr), sodium iodide (NaI), or the like may be used instead of, for example, LiF or LiX described above. Similarly, in the production of a solid electrolyte where A is K, potassium fluoride (KF), potassium chloride (KCl), potassium bromide (KBr), potassium iodide (KI), or the like may be used.

The all solid-state secondary battery 1 using a solid electrolyte where A includes Na may be an all solid-state sodium-ion secondary battery. In this case, one example of the positive active material of the positive electrode layer 112 is Na(Fe, Mn)O₂. Other examples of the positive active material include layered compounds such as NaCoO₂, NaNiO₂, NaMnO₂, Na(Ni,Co,Mn)O₂, NaFeO₂, or Na(Ni, Mn, Fe, Ti)O₂, spinel-type compounds such as NaMn₂O₄, polyanion-type compounds such as Na₃V₂(PO₄)₃, Na₂Fe₂(SO₄)₃, Na₂Mn₂(SO₄)₃, NaFePO₄, NaMnPO₄, Na₄Fe₇(PO₄)₆, or Na₃V(PO₃)₃N, and pyrophosphate compounds such as Na₂MnP₂O₇ and Na₂FeP₂O₇. One example of the negative active material of the negative electrode layer 122 may be hard carbon. Other examples of the negative active material include metal such as Na, In, Sn, and Sb, alloys of the metal and Na, graphite, SiO, TiO₂, Fe₂O₃, Na_{4/3}Ti_{5/3}O₄, Na₂Ti₆O₁₃, Na_{0.66}[Li_{0.22}Ti_{0.78}]O₂, Na₃V₂(PO₄)₃, SnO, and Li₄Ti₅O₁₂. The all solid-state secondary battery 1 may also be an all solid-state potassium-ion secondary battery. In this case, known materials are used as the positive active material and the negative active material.

Next, experiments on the solid electrolyte are described. The experiments described below were conducted in a glove box with a dew point of -60°C or less in an argon (Ar) atmosphere. Tables 1 and 2 show conditions and measurement results for Experiments 1 to 21. Experiments 2 to 21 are examples of the present invention in which the solid electrolyte contains X (in the present example, Cl), and Experiment 1 is a comparative example in which the solid electrolyte does not contain X. In Tables 1 and 2, the column labeled "Composition Formula" indicates also the values for a, b, and c when the solid electrolyte is expressed by a composition formula of A_{3-b+c}Mα_{1-b-c}Mβ_{b}Mγ_{c}F₆₋ₐXₐ. Here, Mα is either Ga or Ga and Al, Mβ is Zr, and Mγ is Mg.

**Table 1**

| No | Mixture Ratio of Raw Materials [mol] | | | | | | | | Composition Formula | a | b | c | Conductivity [S/cm] |
|---|---|---|---|---|---|---|---|---|---|---|---|---|---|
| | LiF | LiCl | NaF | NaCl | GaF₃ | ZrF₄ | AlF₃ | MgF₂ | - | - | - | - | |
| Experiment 1 | 3 | 0 | 0 | 0 | 1 | 0 | 0 | 0 | Li₃GaF₆ | 0 | 0 | 0 | 2.8E-07 |
| Experiment 2 | 2.9 | 0.1 | 0 | 0 | 1 | 0 | 0 | 0 | Li₃GaF_{5.9}Cl_{0.1} | 0.1 | 0 | 0 | 1.1E-05 |
| Experiment 3 | 2.7 | 0.3 | 0 | 0 | 1 | 0 0 | 0 | 0 | Li₃GaF_{5.7}Cl_{0.3} | 0.3 | 0 0 | 0 | 2.8E-04 |
| Experiment 4 | 2.4 | 0.6 | 0 | 0 | 1 | | 0 | 0 | Li₃GaF_{5.4}Cl_{0.6} | 0.6 | | 0 | 1.5E-03 |
| Experiment 5 | 2 | 1 | 0 | 0 | 1 | 0 | 0 | 0 | Li₃GaF₅Cl | 1 | 0 | 0 | 6.3E-04 |
| Experiment 6 | 2.2 | 0.6 | 0 | 0 | 0.8 | 0.2 | 0 | 0 | Li_{2.8}Ga_{0.8}Zr_{0.2}F_{5.4}Cl_{0.6} | 0.6 | 0.2 | 0 | 5.8E-04 |
| Experiment 7 | 2.4 | 0.6 | 0 | 0 | 0.8 | 0 | 0.2 | 0 | Li₃Ga_{0.8}Al_{0.2}F_{5.4}Cl_{0.6} | 0.6 | 0 | 0 | 1.4E-03 |
| Experiment 8 | 2.4 | 0.6 | 0 | 0 | 0.5 | 0 | 0.5 | 0 | Li₃G_{0.5}Al_{0.5}F_{5.4}Cl_{0.6} | 0.6 | 0 | 0 | 2.2E-04 |
| Experiment 9 | 2.4 | 0.6 | 0 | 0 | 0.3 | 0 | 0.7 | 0 | Li₃Ga_{0.3}Al_{0.7}F_{5.4}Cl_{0.6} | 0.6 | 0 | 0 | 5.1E-05 |
| Experiment 10 | 1.5 | 1.5 | 0 | 0 | 1 | 0 | 0 | 0 | Li₃GaF_{4.5}Cl_{1.5} | 1.5 | 0 | 0 | 1.2E-02 |
| Experiment 11 | 1 | 2 | 0 | 0 | 1 | 0 | 0 | 0 | Li₃GaF₄Cl₂ | 2 | 0 | 0 | 1.9E-02 |
| Experiment 12 | 0 | 3 | 0 | 0 | 1 | 0 | 0 | 0 | Li₃GaF₃Cl₃ | 3 | 0 | 0 | 1.1E-02 |

**[Table 2]**

| No | Mixture Ratio of Raw Materials [mol] | | | | | | | | Composition Formula | a | b | c | Conductivity [S/cm] |
|---|---|---|---|---|---|---|---|---|---|---|---|---|---|
| | LiF | LiCl | NaF | NaCl | GaF₃ | ZrF₄ | AlF₃ | MgF₂ | - | - | - | - | |
| Experiment 13 | 1 | 2 | 0 | 0 | 0.8 | 0 | 0.2 | 0 | Li₃Ga_{0.8}Al_{0.2}F₄Cl₂ | 2 | 0 | 0 | 9.8E-03 |
| Experiment 14 | 1 | 2 | 0 | 0 | 0.7 | 0 | 0.3 | 0 | Li₃Ga_{0.7}Al_{0.3}F₄Cl₂ | 2 | 0 | 0 | 2.0E-03 |
| Experiment 15 | 1 | 2 | 0 | 0 | 0.6 | 0 | 0.4 | 0 | Li₃Ga_{0.6}Al_{0.4}F₄Cl₂ | 2 | 0 | 0 | 1.4E-03 |
| Experiment 16 | 1.1 | 2 | 0 | 0 | 0.9 | 0 | 0 | 0.1 | Li_{3.1}Ga_{0.9}Mg_{0.1}F₄Cl₂ | 2 | 0 | 0.1 | 1.9E-03 |
| Experiment 17 | 1.3 | 2 | 0 | 0 | 0.7 | 0 | 0 | 0.3 | Li_{3.3}Ga_{0.7}Mg_{0.3}F₄Cl₂ | 2 | 0 | 0.3 | 1.4E-03 |
| Experiment 18 | 1.4 | 2 | 0 | 0 | 0.6 | 0 | 0 | 0.4 | Li_{3.4}Ga_{0.6}Mg_{0.4}F₄Cl₂ | 2 | 0 | 0.4 | 1.2E-03 |
| Experiment 19 | 0 | 0 | 1 | 2 | 1 | 0 | 0 | 0 | Na₃GaF₄Cl₂ | 2 | 0 | 0 | 4.6E-04 |
| Experiment 20 | 0 | 0 | 0 | 3 | 1 | 0 | 0 | 0 | Na₃GaF₃Cl₃ | 3 | 0 | 0 | 1.8E-04 |
| Experiment 21 | 0 | 0 | 1 | 2 | 0.7 | 0 | 0.3 | 0 | Na₃Ga_{0.7}Al_{0.3}F₄Cl₂ | 2 | 0 | 0 | 2.6E-04 |

### Experiment 1

Commercial LiF powder and commercial GaF₃ powder were prepared as raw materials. Each powder was weighed so that the molar ratio of LiF:GaF₃ became 3: 1. A resultant mixture was subjected to a mechanical milling process using a planetary ball mill to obtain a solid electrolyte.

### Experiment 2

A solid electrolyte was obtained by performing the same processing as in Experiment 1, except that commercial LiCl powder was prepared in addition to the LiF powder and the GaF₃ powder, and each powder was weighed so that the molar ratio of LiF:LiCl:GaF₃ became 2.9:0.1:1.

### Experiment 3

A solid electrolyte was obtained by performing the same processing as in Experiment 1, except that LiF powder, LiCl powder, and GaF₃ powder were used and weighted so that the molar ratio of LiF:LiCl:GaF₃ became 2.7:0.3: 1.

### Experiment 4

A solid electrolyte was obtained by performing the same processing as in Experiment 1, except that LiF powder, LiCl powder, and GaF₃ powder were used and weighed so that the molar ratio of LiF:LiCl:GaF₃ became 2.4:0.6: 1.

### Experiment 5

A solid electrolyte was obtained by performing the same processing as in Experiment 1, except that LiF powder, LiCl powder, and GaF₃ powder were used and weighed so that the molar ratio of LiF:LiCl:GaF₃ became 2:1:1.

### Experiment 6

A solid electrolyte was obtained by performing the same processing as in Experiment 1, except that commercial ZrF₄ powder was prepared in addition to the LiF powder, the LiCl powder, and the GaF₃ powder, and each powder was weighed so that the molar ratio of LiF:LiCl:GaF₃:ZrF₄ became 2.2:0.6:0.8:0.2.

### Experiment 7

A solid electrolyte was obtained by performing the same processing as in Experiment 1, except that commercial AlF₃ powder was prepared in addition to the LiF powder, the LiCl powder, and the GaF₃ powder, and each powder was weighed so that the molar ratio of LiF:LiCl: GaF₃:AlF₃ became 2.4:0.6:0.8:0.2.

### Experiment 8

A solid electrolyte was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 2.4:0.6:0.5:0.5.

### Experiment 9

A solid electrolyte was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 2.4:0.6:0.3:0.7.

### Experiment 10

A solid electrolyte was obtained by performing the same processing as in Experiment 1, except that LiF powder, LiCl powder, and GaF₃ powder were used and weighed so that the molar ratio of LiF:LiCl:GaF₃ became 1.5:1.5:1.

### Experiment 11

A solid electrolyte was obtained by performing the same processing as in Experiment 1, except that LiF powder, LiCl powder, and GaF₃ powder were used and weighed so that the molar ratio of LiF:LiCl:GaF₃ became 1:2:1.

### Experiment 12

A solid electrolyte was obtained by performing the same processing as in Experiment 1, except that LiCl powder and GaF₃ powder were used and weighed so that the molar ratio of LiCl:GaF₃ became 3:1.

### Experiment 13

A solid electrolyte was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 1:2:0.8:0.2.

### Experiment 14

A solid electrolyte was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 1:2:0.7:0.3.

### Experiment 15

A solid electrolyte was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 1:2:0.6:0.4.

### Experiment 16

A solid electrolyte was obtained by performing the same processing as in Experiment 1, except that commercially available MgF₂ powder was prepared in addition to the LiF powder, the LiCl powder, and the GaF₃ powder, and each powder was weighed so that the molar ratio of LiF:LiCl:GaF₃:MgF₂ became 1.1:2:0.9:0.1.

### Experiment 17

A solid electrolyte was obtained by performing the same processing as in Experiment 1, except that LiF powder, LiCl powder, GaF₃ powder, and MgF₂ powder were used and weighed so that the molar ratio of LiF:LiCl:GaF₃: MgF₂ became 1.3:2:0.7:0.3.

### Experiment 18

A solid electrolyte was obtained by performing the same processing as in Experiment 1, except that LiF powder, LiCl powder, GaF₃ powder, and MgF₂ powder were used and weighed so that the molar ratio of LiF:LiCl:GaF₃: MgF₂ became 1.4:2:0.6:0.4.

### Experiment 19

A solid electrolyte was obtained by performing the same processing as in Experiment 1, except that commercial NaF powder, NaCl powder, and GaF₃ powder were prepared and weighed so that the molar ratio of NaF:NaCl:GaF₃ became 1:2:1.

### Experiment 20

A solid electrolyte was obtained by performing the same processing as in Experiment 1, except that NaCl powder and GaF₃ powder were used and weighed so that the molar ratio of NaCl:GaF₃ became 3:1.

### Experiment 21

A solid electrolyte was obtained by performing the same processing as in Experiment 1, except that NaF powder, NaCl powder, GaF₃ powder, and AlF₃ powder were used and weighed so that the molar ratio of NaF:NaCl:GaF₃:AlF₃ became 1:2:0.7:0.3.

### Measurement of Ion Conductivity

Each solid electrolyte was introduced into a mold that includes a sleeve made of resin and upper and lower punches made of metal, and was subj ected to uniaxial press molding. The upper and lower punches were connected to conductors, and impedance measurement was conducted at ambient temperature to calculate ion conductivity (lithium-ion conductivity in Experiments 1 to 18 or sodium-ion conductivity in Experiments 19 to 21). In Table 1, the ion conductivity is shown in the column labeled "Conductivity."

### Construction of All Solid-State Battery

The solid electrolyte according to Experiment 14, Li₃YCl₆ serving as a solid electrolyte, LiFePO₄ (LFP) serving as a positive active material, carbon fiber serving as a conductive assistant, and Li₄Ti₅O₁₂ (LTO) serving as a negative active material were prepared. Li₃YCl₆ was prepared according to "Solid Halide Electrolytes with High Lithium-Ion Conductivity for Application in 4V Class Bulk-Type All-Solid-State Batteries" by Tetsuya Asano and other five members (ADVANCED MATERIALS, 2018, vol. 30, 1803075) (Document 4 described above). LFP, the solid electrolyte according to Experiment 14, and the carbon fiber were weighed in a weight ratio of 30:30:1 and mixed together in a mortar to obtain positive blended powder. LTO, Li₃YCl₆, and the carbon fiber were weighed in a weight ratio of 30:40:1 and mixed together in a mortar to obtain negative blended powder. Then, 100 mg of Li₃YCl₆ was introduced into a mold (with an inside diameter of φ10 mm) including a sleeve made of PEEK resin and upper and lower punches made of SUS, and the mold was subj ected to uniaxial pressing. With one of the punches removed from the mold, 30 mg of the positive blended powder was introduced into the mold, and the mold was again subjected to uniaxial pressing. Then, with the punch on the side opposite to the introduction side of the positive blended powder removed from the mold, 40 mg of the negative blended powder was introduced into the mold, and the mold was subjected to uniaxial pressing. This constructed an all solid-state battery in which the positive electrode was formed from LFP and the solid electrolyte according to Experiment 14, the electrolyte layer was formed from Li₃YCl₆, and the negative electrode was formed from LTO and Li₃YCl₆.

### Charge and Discharge Test

Current-collector wiring lines were connected to the upper and lower punches, and a charge and discharge test was conducted at ambient temperature. As charging conditions, after a constant current (cc) charging at 300 µA/cm² to a cut-off voltage of 2.2V, a constant voltage (cv) charging was performed to a cut-off current of 30 µA/cm². As discharging conductions, after a constant current (cc) discharging at 300 µA/cm² to a cut-off voltage of 1.0V, a constant voltage (cv) discharging was performed to a cut-off current of 30 µA/cm².

Fig. 2 is a diagram showing discharge curves obtained as a result of the charge and discharge test. In Fig. 2, the discharge curve of the initial cycle is indicated by a solid line L1, and the discharge curve of the 20-th cycle is indicated by a broken line L2. The results of the charge and discharge test show that the discharge capacity per weight of the positive electrode was 46 mAh/g-positive electrode. The results also show that the capacitance maintenance factor of the 20-th cycle was 99%. This indicates that, even in the 20-th cycle, it is possible to properly repeat charging and discharging without reducing the discharge capacity. In this way, it is confirmed that the solid electrolyte according to Experiment 14 can function as an Li-ion solid electrolyte for all solid-state batteries.

### Evaluation of Experiments

As shown in Table 1, the solid electrolytes according to Experiments 2 to 18, which contained X (here, Cl), exhibited higher lithium-ion conductivity than the solid electrolyte according to Experiment 1, which did not contain X. It is conceivable that the binding force of Li ions serving as univalent cations is weakened as a result of the Li-ion conductive materials containing anions having greater ionic radii. This facilitates the migration of Li ions, i.e., improves ion conductivity. The ionic radius of F ions is 1.33Å, whereas the ionic radius of Cl ions is 1.81Å. Although details are not always clear, it is presumed that the solid electrolytes according to Experiments 2 to 18 exhibited high ion conductivity because Cl contained in the solid electrolytes had a greater ionic radius than F (i.e., X was substituted for part of F). For similar reasons, it is conceivable that the solid electrolytes according to Experiments 19 to 21, which were Na compounds (Na-ion conductive materials), exhibited high ion conductivity.

As described above, the present solid electrolyte contains A, M, F, and X. A is at least one element selected from a group consisting of Li, Na, and K. M is a metallic element(s) other than A or a metalloid element(s). X is at least one element selected from a group consisting of Cl, Br, and I. The solid electrolyte will exhibit high ion conductivity because it contained X having a greater ionic radius than F. The solid electrolyte assures high safety because it does not contain sulfide and thus does not generate hydrogen sulfide gas.

In a preferable solid electrolyte, M contains Ga as in Experiments 2 to 21. This more reliably improves ion conductivity.

A preferable solid electrolyte may be expressed by a composition formula of:

A₃MF₆₋ₐXₐ ...(4)

where 0 < a < 6 is satisfied. This favorably provides the solid electrolyte with high ion conductivity. As in Experiments 10 to 21, it is more preferable that 1 < a < 6 may be satisfied, and it is yet more preferable that 1 < a < 4 may be satisfied. This considerably improves ion conductivity.

Preferably, as in Experiments 2 to 21, M contains at least one element selected from a group consisting of Mα serving as a trivalent cation, Mβ serving as a tetravalent cation, and Mγ serving as a bivalent cation. The composition formula is also expressed as:

A_{3-b+c}Mα_{1-b-c}Mβ_{b}Mγ_{c}F₆₋ₐXₐ ...(6)

where 0 < a < 6, 0 ≤ b < 1, and 0 ≤ c < 1 are satisfied. This more reliably improves ion conductivity.

M may contain both of Mα serving as a trivalent cation and Mβ serving as a tetravalent cation. In this case, the composition formula is expressed as:

A_{3-b}Mα_{1-b}Mβ_{b}F₆₋ₐXₐ ...(5)

where 0 < a < 6 and 0 < b < 1 are satisfied. This favorably provides the solid electrolyte with high ion conductivity as in Experiment 6 in which Zr substitutes for part of Ga.

Similarly, M may contain both of Mα serving as a trivalent cation and Mγ serving as a bivalent cation. In this case, the composition formula is expressed as:

A_{3+c}Mα_{1-c}Mγ_{c}F₆₋ₐXₐ ...(7)

where 0 < a < 6 and 0 < c < 1 are satisfied. This favorably provides the solid electrolyte with high ion conductivity as in Experiments 16 to 18 in which Mg substitutes for part of Ga.

The present solid electrolyte and the all solid-state secondary battery 1 may be modified in various ways.

The present solid electrolyte may be expressed by a different composition formula other than Composition Formulas (1) to (7) described above.

The present solid electrolyte may be mixed with any other material (which may contain A such as Li) and used as an electrolyte material. In this case, it is preferable that the present solid electrolyte may have the highest mass ratio among all components contained in the electrolyte material, i.e., the present solid electrolyte may be a principal component. The mass ratio of the principal component in the electrolyte material may be preferably higher than or equal to 50% by mass, more preferably higher than or equal to 60% by mass, and yet more preferably higher than or equal to 70% by mass.

The present solid electrolyte used in the all solid-state secondary battery 1 does not necessarily have to be included in every one of the positive electrode 11, the negative electrode 12, and the electrolyte layer 13, and may be included in at least one of the positive electrode 11, the negative electrode 12, and the electrolyte layer 13. The present solid electrolyte may also be used in batteries other than all solid-state secondary batteries, or may be used for purposes other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all solid-state lithium-ion secondary battery
- 11: positive electrode
- 12: negative electrode
- 13: electrolyte layer

## Claims

1. A solid electrolyte containing:
A, M, F, and X,
wherein A is at least one element selected from a group consisting of Li, Na, and K,
M is a metallic element(s) other than A or a metalloid element(s), and
X is at least one element selected from a group consisting of Cl, Br, and I.

2. The solid electrolyte according to claim 1, wherein
M contains Ga.

3. The solid electrolyte according to claim 1,
the solid electrolyte being expressed by a composition formula of A₃MF₆₋ₐXₐ,
where 0 < a < 6 is satisfied.

4. The solid electrolyte according to claim 1, wherein
M contains at least one element selected from a group consisting of Mα serving as a trivalent cation, Mβ serving as a tetravalent cation, and Mγ serving as a bivalent cation, and
said solid electrolyte is expressed by a composition formula of A_{3-b+c}Mα_{1-b-c}Mβ_{b}Mγ_{c}F₆₋ₐXₐ,
where 0 < a < 6, 0 ≤ b < 1, and 0 ≤ c < 1 are satisfied.

5. The solid electrolyte according to claim 4, wherein
M contains Zr.

6. The solid electrolyte according to claim 4, wherein
M contains Mg.

7. A battery comprising:
the solid electrolyte according to any one of claims 1 to 6.
